# EUROPEAN PATENT APPLICATION

(11) **EP 4 804 599 A1**
(43) Date of publication of application: **09.09.2026**
(21) Application number: 23957342.1
(22) Date of filing: 03.11.2023
(51) Int. Cl.: H04W 24/04

(54) **COMMUNICATION METHOD, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/129696
(87) International publication number: WO 2025/091486

(57) **Abstract**

Embodiments of the present disclosure relate to the technical field of communications, and provide a communication method, a device, and a storage medium. The method comprises: a first AP determines a first radio frame, wherein the first radio frame comprises a first identifier bit, and the first identifier bit is used to indicate whether a neighbor AP is a UHR AP; and the first AP sends the first radio frame. The embodiments of the present disclosure can provide a method for indicating whether a neighbor AP is a UHR AP.

## Description

### FIELD

The present disclosure relates to the field of wireless communication technologies, and provides a communication method, a device and a storage medium.

### BACKGROUND

To support increasing demands for higher throughput, a lower network latency, and a higher reliability in wireless communications, Ultra High Reliability (UHR) technology has been introduced. UHR technology aims to enhance the reliability of Wireless Local Area Network (WLAN) connections, reduce latency, improve network manageability, increase throughput, and reduce device-level power consumption across a range of different Signal-to-Noise Ratio (SNR) conditions.

In UHR, mechanisms have been investigated for extending transmission distance through a distributed resource unit (dRU). In addition, techniques to enabling an access point (AP) to indicate whether a neighbor AP is a UHR AP will be further studied.

### SUMMARY

The present disclosure provides a communication method, a device, and a storage medium, which can provide a way to indicate whether a neighbor AP is a UHR AP.

In a first aspect, the present disclosure provides a communication method, where the method includes:
a first AP determining a first wireless frame, where the first wireless frame includes a first identifier bit, and the first identifier bit is used to indicate whether a neighbor AP is an ultra high reliability (UHR) AP; and
the first AP sending the first wireless frame.

In a second aspect, the present disclosure provides a communication method, where the method includes:
a station (STA) receiving a first wireless frame sent by a first AP, where the first wireless frame includes a first identifier bit, and the first identifier bit is used to indicate whether a neighbor AP is a UHR AP.

In a third aspect, the present disclosure provides an AP, including:
a processing module configured to determine a first wireless frame, where the first wireless frame includes a first identifier bit, and the first identifier bit is used to indicate whether a neighbor AP is a UHR AP; and
a transceiver module configured to send the first wireless frame.

In a fourth aspect, the present disclosure provides a STA, including:
a transceiver module configured to receive a first wireless frame sent by a first AP, where the first wireless frame includes a first identifier bit, and the first identifier bit is used to indicate whether a neighbor AP is a UHR AP.

In a fifth aspect, the present disclosure provides an AP, including one or more processors;
where the AP is configured to perform the communication method according to the first aspect of the present disclosure.

In a sixth aspect, the present disclosure provides a STA, including one or more processors;
where the STA is configured to perform the communication method according to the second aspect of the present disclosure.

In a seventh aspect, the present disclosure provides a storage medium storing instructions that, when executed on a communication device, cause the communication device to perform the communication method according to the first aspect of the present disclosure.

In an eighth aspect, the present disclosure provides a communication system, where the communication system includes an AP and at least one STA; where the AP is configured to perform the method as described in the first aspect, and each STA is configured to perform the method as described in the second aspect.

Based on the communication method, a device, and a storage medium provided by the present disclosure, a way to indicate whether a neighbor AP is a UHR AP through a wireless frame can be provided.

Additional aspects and advantages of the present disclosure will be set forth in part in the description below, which will become apparent from the description below, or will be learned through practice of the present disclosure.

### BRIEF DESCRIPTION OF THE DRAWINGS

In order to more clearly illustrate the technical solutions in the embodiments of the present disclosure, the drawings required to be used in the description of the embodiments of the present disclosure will be briefly introduced below. Obviously, the drawings in the following description are only some embodiments of the present disclosure, and other drawings can also be obtained from these drawings by those of ordinary skill in the art without creative efforts.
FIG. 1 is a schematic structural diagram of a communication system according to an embodiment of the present disclosure;
FIG. 2 is a schematic interaction diagram of a communication method according to an embodiment of the present disclosure;
FIG. 3 is a schematic flowchart I of a communication method according to an embodiment of the present disclosure;
FIG. 4 is a schematic flowchart II of a communication method according to an embodiment of the present disclosure;
FIG. 5a-5c are schematic diagrams of frame structures according to an embodiment of the present disclosure;
FIG. 6 is a schematic structural diagram of an AP according to an embodiment of the present disclosure;
FIG. 7 is a schematic structural diagram of a STA according to an embodiment of the present disclosure;
FIG. 8 is a schematic structural diagram of a communication device according to an embodiment of the present disclosure; and
FIG. 9 is a schematic structural diagram of a chip according to an embodiment of the present disclosure.

### DETAILED DESCRIPTION

The present disclosure provides a communication method, device, and storage medium.

In a first aspect, the present disclosure provides a communication method, where the method is performed by a first access point (AP), and the method includes:
a first AP determining a first wireless frame, where the first wireless frame includes a first identifier bit, and the first identifier bit is used to indicate whether a neighbor AP is an ultra high reliability (UHR) AP; and
the first AP sending the first wireless frame.

In the above embodiment, the first AP can indicate whether a neighbor AP is a UHR AP through the first identifier bit in the first wireless frame, so that a STA can quickly learn whether the neighbor AP supports UHR, which helps meeting communication requirements of the AP and the STA in a UHR scenario, thereby improving system throughput.

In some embodiments in combination with the first aspect, in some embodiments, the first wireless frame includes a neighbor report element field, the neighbor report element field includes a basic service set identifier information field, and the basic service set identifier information field includes the first identifier bit.

In the above embodiment, the first identifier bit can be located in the basic service set identifier information field in the neighbor report element field, which helps saving signaling resources and improve signaling resource utilization.

In some embodiments in combination with the first aspect, in some embodiments, the first identifier bit indicates, by a first value, that the neighbor AP is the UHR AP, and the first identifier bit indicates, by a second value, that the neighbor AP is not the UHR AP.

In some embodiments in combination with the first aspect, in some embodiments, in a case where the first identifier bit indicates that the neighbor AP is the UHR AP, the first wireless frame includes a neighbor report element field, and the neighbor report element field includes at least one of a first information field or a second information field;
the first information field includes a first sub-element identifier bit, and the first sub-element identifier bit indicates, by a third value, that the first information field is a UHR capabilities element field; and the second information field includes a second sub-element identifier bit, and the second sub-element identifier bit indicates, by a fourth value, that the second information field is a UHR operation element field.

In the above embodiment, when the first wireless frame indicates that the neighbor AP is a UHR AP, the neighbor report element field in the first wireless frame can support the presence of a UHR capabilities element field and/or a UHR operation element field, thereby indicating UHR capability information of the neighbor AP through the UHR capabilities element field and/or the UHR operation element field, which helps the STA to further learn the UHR capability information of the neighbor AP and helps saving signaling resources.

In some embodiments in combination with the first aspect, in some embodiments, an element content of the first information field includes an element content of a UHR capabilities element field in a second wireless frame sent by the neighbor AP, and an element content of the second information field includes an element content of a UHR operation element field in the second wireless frame;
the second wireless frame is a beacon frame, a probe response frame, an association response frame, or a reassociation response frame.

In the above embodiment, when the first wireless frame includes the first information field, the first information field can indicate to the STA the element content of the UHR capabilities element field in the second wireless frame sent by the neighbor AP; when the first wireless frame includes the second information field, the second information field can indicate to the STA the element content of the UHR operation element field in the second wireless frame, which further helps the STA to learn the UHR capability information of the neighbor AP and helps saving signaling resources.

In some embodiments in combination with the first aspect, in some embodiments, the first information field includes at least one of:
a first sub-information field, where the first sub-information field is used to indicate that the neighbor AP supports a data transmission using a distributed resource unit (dRU) and/or a multiple distributed resource unit (M-dRU) with a maximum bandwidth of 80 MHz;
a second sub-information field, where the second sub-information field is used to indicate whether the neighbor AP supports a data transmission using a dRU in a punctured channel; or
a third sub-information field, where the third sub-information field is used to indicate whether the neighbor AP supports sharing a transmission opportunity (TXOP) with another AP.

In the above embodiment, when the neighbor AP is a UHR AP, the first wireless frame can indicate, through the first information field, capability information such as whether the neighbor AP supports data transmission using a dRU and/or M-dRU with a maximum bandwidth of 80 MHz, whether it supports data transmission using a dRU in a punctured channel, and whether it supports sharing a TXOP with another AP, which helps the STA to quickly learn the above capability information, thereby adapting to communication requirements in a UHR scenario.

In some embodiments in combination with the first aspect, in some embodiments, the second information field includes a fourth sub-information field, and the fourth sub-information field is used to indicate at least one of:
a maximum number of spatial streams (NSS) supported for transmission by the neighbor AP in different modulation and coding schemes (MCSs); or
a maximum NSS supported for reception by the neighbor AP in different MCSs.

In the above embodiment, when the neighbor AP is a UHR AP, the first wireless frame can indicate, through the second information field, the maximum NSS supported for transmission and/or reception by the neighbor AP under different MCSs, which helps the STA quickly learn the above capability information, thereby adapting to communication requirements in a UHR scenario.

In some embodiments in combination with the first aspect, in some embodiments, the first wireless frame is an association response frame, a reassociation response frame, or an authentication frame.

In the above embodiment, the first wireless frame can reuse an existing association response frame, reassociation response frame, or authentication frame, which helps saving signaling resources.

In a second aspect, the present disclosure provides a communication method, where the method can be performed by a STA, and the method includes:
receiving a first wireless frame sent by a first AP, where the first wireless frame includes a first identifier bit, and the first identifier bit is used to indicate whether a neighbor AP is a UHR AP.

In the above embodiment, the STA can determine, through the first identifier bit in the first wireless frame, whether a neighbor AP of the first AP is a UHR AP, so that it can quickly learn whether the neighbor AP supports UHR, which helps meet communication requirements of the AP and the STA in a UHR scenario, thereby improving system throughput.

In some embodiments in combination with the second aspect, in some embodiments, the first wireless frame includes a neighbor report element field, the neighbor report element field includes a basic service set identifier information field, and the basic service set identifier information field includes the first identifier bit.

In the above embodiment, the first identifier bit can be located in the basic service set identifier information field in the neighbor report element field, which helps saving signaling resources and improve signaling resource utilization.

In some embodiments in combination with the second aspect, in some embodiments, the first identifier bit indicates, by a first value, that the neighbor AP is the UHR AP, and the first identifier bit indicates, by a second value, that the neighbor AP is not the UHR AP.

In some embodiments in combination with the second aspect, in some embodiments, in a case where the first identifier bit indicates that the neighbor AP is the UHR AP, the first wireless frame includes a neighbor report element field, and the neighbor report element field includes at least one of a first information field or a second information field;
the first information field includes a first sub-element identifier bit, and the first sub-element identifier bit indicates, by a third value, that the first information field is a UHR capabilities element field; and the second information field includes a second sub-element identifier bit, and the second sub-element identifier bit indicates, by a fourth value, that the second information field is a UHR operation element field.

In the above embodiment, when the first wireless frame indicates that the neighbor AP is a UHR AP, the neighbor report element field in the first wireless frame can support the presence of a UHR capabilities element field and/or a UHR operation element field, so that the STA can determine the UHR capability information of the neighbor AP through the UHR capabilities element field and/or the UHR operation element field, which helps the STA further learn the UHR capability information of the neighbor AP and helps saving signaling resources.

In some embodiments in combination with the second aspect, in some embodiments, an element content of the first information field includes an element content of a UHR capabilities element field in a second wireless frame sent by the neighbor AP, and an element content of the second information field includes an element content of a UHR operation element field in the second wireless frame;
the second wireless frame is a beacon frame, a probe response frame, an association response frame, or a reassociation response frame.

In the above embodiment, when the first wireless frame includes the first information field, the STA can determine, through the first information field, the element content of the UHR capabilities element field in the second wireless frame sent by the neighbor AP; when the first wireless frame includes the second information field, the STA can determine, through the second information field, the element content of the UHR operation element field in the second wireless frame sent by the neighbor AP, which further helps the STA learn the UHR capability information of the neighbor AP and helps saving signaling resources.

In some embodiments in combination with the second aspect, in some embodiments, the first information field includes at least one of:
a first sub-information field, where the first sub-information field is used to indicate that the neighbor AP supports a data transmission using a distributed resource unit (dRU) and/or a multiple distributed resource unit (M-dRU) with a maximum bandwidth of 80 MHz;
a second sub-information field, where the second sub-information field is used to indicate whether the neighbor AP supports a data transmission using a dRU in a punctured channel; or
a third sub-information field, where the third sub-information field is used to indicate whether the neighbor AP supports sharing a transmission opportunity (TXOP) with another AP.

In the above embodiment, when the neighbor AP is a UHR AP, the STA can determine, through the first information field in the first wireless frame, capability information of the neighbor AP of the first AP, such as whether it supports data transmission using a dRU and/or M-dRU with a maximum bandwidth of 80 MHz, whether it supports data transmission using a dRU in a punctured channel, and whether it supports sharing a TXOP with another AP, which helps the STA quickly learn the above capability information, thereby adapting to communication requirements in a UHR scenario.

In some embodiments in combination with the second aspect, in some embodiments, the second information field includes a fourth sub-information field, and the fourth sub-information field is used to indicate at least one of:
a maximum number of spatial streams (NSS) supported for transmission by the neighbor AP in different modulation and coding schemes (MCSs); or
a maximum NSS supported for reception by the neighbor AP in different MCSs.

In the above embodiment, when the neighbor AP is a UHR AP, the STA can determine, through the second information field, the maximum NSS supported for transmission and/or reception by the neighbor AP under different MCSs, which helps the STA quickly learn the above capability information, thereby adapting to communication requirements in a UHR scenario.

In some embodiments in combination with the second aspect, in some embodiments, the first wireless frame is an association response frame, a reassociation response frame, or an authentication frame.

In the above embodiment, the first wireless frame can reuse an existing association response frame, reassociation response frame, or authentication frame, which helps saving signaling resources.

In a third aspect, the present disclosure provides an AP, including:
a processing module configured to determine a first wireless frame, where the first wireless frame includes a first identifier bit, and the first identifier bit is used to indicate whether a neighbor AP is a UHR AP; and
a transceiver module configured to send the first wireless frame.

In a fourth aspect, the present disclosure provides a STA, including:
a transceiver module configured to receive a first wireless frame sent by a first AP, where the first wireless frame includes a first identifier bit, and the first identifier bit is used to indicate whether a neighbor AP is a UHR AP.

In a fifth aspect, the present disclosure provides an AP, including one or more processors;
where the AP is configured to perform the communication method according to the first aspect and the optional implementations of the first aspect.

In a sixth aspect, the present disclosure provides a STA, including one or more processors;
where the STA is configured to perform the communication method according to the second aspect and the optional implementations of the second aspect.

In a seventh aspect, the present disclosure provides a communication device, including one or more processors;
where the communication device can serve as an AP to perform the communication method according to the first aspect and the optional implementations of the first aspect, and the communication device can serve as a STA to perform the communication method according to the second aspect and the optional implementations of the second aspect.

In an eighth aspect, the present disclosure provides a storage medium, where the storage medium stores instructions, and when the instructions are executed on a communication device, the communication device is caused to perform the methods described in the first aspect, the second aspect, the optional implementations of the first aspect, and the optional implementations of the second aspect.

In a ninth aspect, the present disclosure provides a program product, where when the program product is executed by a communication device, the communication device is caused to perform the methods described in the first aspect, the second aspect, the optional implementations of the first aspect, and the optional implementations of the second aspect.

In a tenth aspect, the present disclosure provides a computer program, where when the computer program is run on a computer, the computer is caused to perform the methods described in the first aspect, the second aspect, the optional implementations of the first aspect, and the optional implementations of the second aspect.

In an eleventh aspect, the present disclosure provides a chip or a chip system. The chip or chip system includes a processing circuit configured to perform the methods described in the first aspect, the second aspect, the optional implementations of the first aspect, and the optional implementations of the second aspect.

In a twelfth aspect, the present disclosure provides a communication system, where the communication system includes an AP and at least one STA; where the AP is configured to perform the method described in the first aspect and the optional implementations of the first aspect, and each STA is configured to perform the method described in the second aspect and the optional implementations of the second aspect.

It can be understood that the above AP, STA, communication system, communication device, storage medium, program product, computer program, chip or chip system are all used to perform the methods proposed in the present disclosure. Therefore, the beneficial effects that can be achieved can refer to the beneficial effects in the corresponding methods, which will not be repeated here.

The present disclosure provides a communication method, a device, and a storage medium. In some embodiments, terms such as communication method and information processing method can be interchanged, terms such as communication apparatus and information processing apparatus can be interchanged, and terms such as information processing system and communication system can be interchanged.

The embodiments of the present disclosure are not exhaustive, but are merely illustrative of some embodiments and are not intended to limit the scope of the present disclosure. Unless there is a conflict, each step in a certain embodiment can be implemented as an independent embodiment, and the steps can be combined arbitrarily. For example, a solution after removing some steps in a certain embodiment can also be implemented as an independent embodiment, and the order of steps in a certain embodiment can be arbitrarily exchanged. In addition, optional implementations in a certain embodiment can be arbitrarily combined. Furthermore, the embodiments can be arbitrarily combined with each other. For example, some or all steps of different embodiments can be arbitrarily combined, and a certain embodiment can be arbitrarily combined with optional implementations of another embodiment.

In the embodiments of the present disclosure, unless otherwise specified and logically conflicting, terms and/or descriptions between the embodiments are consistent and can be referenced to each other, and technical features in different embodiments can be combined to form new embodiments according to their inherent logical relationships.

The terms used in the embodiments of the present disclosure are only for the purpose of describing particular embodiments and are not intended to limit the present disclosure.

In the embodiments of the present disclosure, unless otherwise stated, elements expressed in singular form, such as "a", "an", "the", "said", "above", "aforementioned", "this", etc., can mean "one and only one" or "one or more", "at least one", etc. For example, when an article such as "a", "an", or "the" is used in translation as in English, the noun following the article can be understood as a singular expression or a plural expression.

In the embodiments of the present disclosure, "multiple" means two or more.

In some embodiments, terms such as "at least one of", "one or more", "a plurality of", "multiple" can be interchanged.

In some embodiments, expressions such as "at least one of A and B", "A and/or B", "in one case A, in another case B", "in response to one case A, in response to another case B", etc., may include the following technical solutions depending on the situation: in some embodiments A (A is performed regardless of B); in some embodiments B (B is performed regardless of A); in some embodiments, selection and execution from A and B (A and B are selectively executed); in some embodiments A and B (both A and B are executed). The same applies when there are more branches such as A, B, C, etc.

In some embodiments, expressions such as "A or B" may include the following technical solutions depending on the situation: in some embodiments A (A is performed regardless of B); in some embodiments B (B is performed regardless of A); in some embodiments, selection and execution from A and B (A and B are selectively executed). The same applies when there are more branches such as A, B, C, etc.

Prefix words such as "first" and "second" in the embodiments of the present disclosure are only used to distinguish different description objects, and do not impose restrictions on the position, order, priority, quantity, or content of the description objects. The description of the description objects refers to the claims or the context in the embodiments, and should not be construed as causing unnecessary restrictions due to the use of prefix words. For example, if the description object is "field", then the ordinal numbers before "field" in "first field" and "second field" do not limit the position or order between the "fields", and "first" and "second" do not limit whether the "fields" they modify are in the same message, nor do they limit the order of the "first field" and "second field". For another example, if the description object is "level", then the ordinal numbers before "level" in "first level" and "second level" do not limit the priority between the "levels". For another example, the number of description objects is not limited by the ordinal numbers, and can be one or more. For example, for "first device", the number of "devices" can be one or more. In addition, objects modified by different prefix words can be the same or different. For example, if the description object is "device", then "first device" and "second device" can be the same device or different devices, and their types can be the same or different. For another example, if the description object is "information", then "first information" and "second information" can be the same information or different information, and their content can be the same or different.

In some embodiments, "include A", "comprise A", "used to indicate A", "carry A" can be interpreted as directly carrying A, or indirectly indicating A.

In some embodiments, terms such as "in response to ...", "in response to determining ...", "in the case of ...", "when ...", "if ...", etc., can be interchanged.

In some embodiments, terms such as "greater than", "greater than or equal to", "not less than", "more than", "more than or equal to", "not fewer than", "higher than", "higher than or equal to", "not lower than", "above", etc., can be interchanged; terms such as "less than", "less than or equal to", "not greater than", "fewer than", "fewer than or equal to", "not more than", "lower than", "lower than or equal to", "not higher than", "below", etc., can be interchanged.

In some embodiments, obtaining data, information, etc., may comply with the laws and regulations of the country where the data is located.

In some embodiments, data, information, etc., may be obtained after obtaining user consent.

In addition, each element, each row, or each column in the tables of the embodiments of the present disclosure can be implemented as an independent embodiment, and any combination of elements, rows, or columns can also be implemented as an independent embodiment.

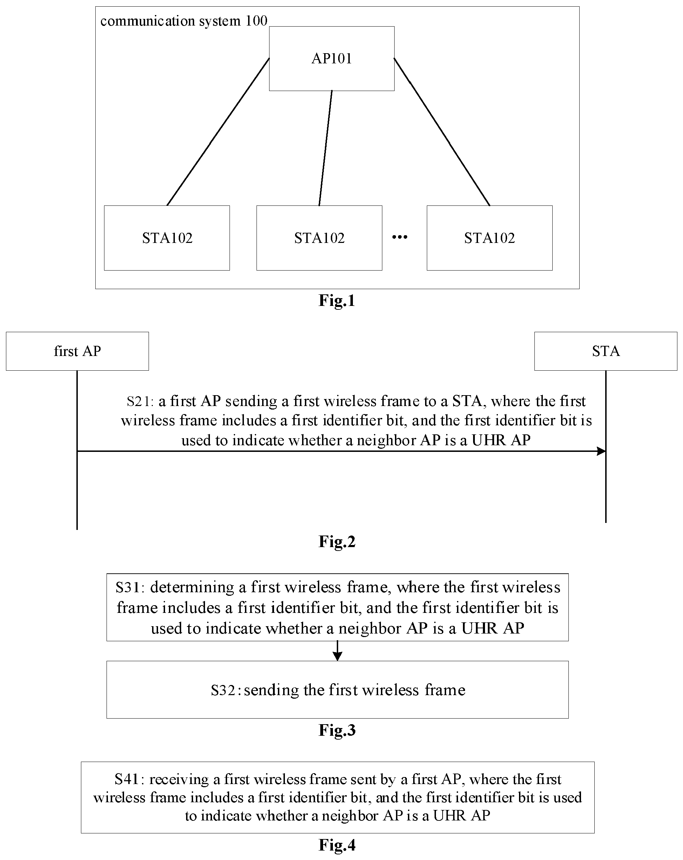

FIG. 1 is a schematic structural diagram of a communication system according to an embodiment of the present disclosure.

As shown in FIG. 1, a communication system 100 includes an AP 101 and at least one STA 102.

The AP 101 and the STA 102 may be independent devices, or may be devices supporting multi-link operation (MLO) technology. For example, the AP 101 may be an AP MLD, and the STA 102 may be a non-AP MLD.

In some embodiments, the AP 101 may be a terminal device or a network device with a wireless fidelity chip.

In some embodiments, the STA 102 may be a wireless communication chip including a Wi-Fi^{™} communication function, a wireless sensor, or a wireless communication terminal. Optionally, the wireless communication terminal may be, for example, at least one of a mobile phone, a wearable device, an Internet of Things device supporting a Wi-Fi communication function, a car with a Wi-Fi communication function, a smart car, a tablet (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, but is not limited thereto.

It can be understood that the communication system described in the embodiments of the present disclosure is to more clearly illustrate the technical solutions of the embodiments of the present disclosure, and does not constitute a limitation on the technical solutions proposed in the present disclosure. Those of ordinary skill in the art will know that with the evolution of system architecture and the emergence of new business scenarios, the technical solutions proposed in the present disclosure are also applicable to similar technical problems.

The following embodiments of the present disclosure can be applied to the communication system 100 shown in FIG. 1, or a part of the subjects, but are not limited thereto. The subjects shown in FIG. 1 are examples. The communication system may include all or part of the subjects in FIG. 1, or may include other subjects other than FIG. 1. The number and form of each subject are arbitrary, each subject may be physical or virtual, and the link relationship between subjects is an example. There may be no link or a link between subjects, the link may be in any manner, and may be a direct link or an indirect link, or a wired link or a wireless link.

The embodiments of the present disclosure can be applied to a wireless local area network (WLAN), for example, can be applied to IEEE 802.11 system standards, such as 802.11a/b/g standards, 802.11n standard, 802.11ac standard, 802.11ax standard, or next-generation standards thereof, such as 802.11bn, 802.11bf, 802.11be standard. The 802.11be standard is also known as Wi-Fi7 or extremely high-throughput (EHT) standard or next-generation standards. Alternatively, the embodiments of the present disclosure can also be applied to wireless local area network systems such as the Internet of Things (IoT) network or Vehicle to X (V2X) network. Of course, the embodiments of the present disclosure can also be applied to other possible communication systems, such as a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, and a future fifth generation (5G) communication system, etc.

The technical solutions in the embodiments of the present disclosure will be clearly and completely described below with reference to the accompanying drawings. Obviously, the described embodiments are only some of the embodiments of the present disclosure, not all of them. Based on the embodiments in the present disclosure, all other embodiments obtained by those of ordinary skill in the art without creative efforts fall within the scope of the present disclosure.

FIG. 2 is a schematic interaction diagram of a communication method according to an embodiment of the present disclosure. The communication method shown in FIG. 2 includes:
Step S21: a first AP sending a first wireless frame to a STA, where the first wireless frame includes a first identifier bit, and the first identifier bit is used to indicate whether a neighbor AP is a UHR AP.

In some embodiments, the first AP may be an association response frame, a reassociation response frame, or an authentication frame.

In some embodiments, the first wireless frame includes a neighbor report element field, and the neighbor report element field includes the first identifier bit.

In some embodiments, the first wireless frame includes a neighbor report element field, the neighbor report element field includes a basic service set identifier information field, and the basic service set identifier information field includes the first identifier bit.

The first identifier bit may be at least one reserved bit of the basic service set identifier information field.

As an example, the format of the neighbor report element field may be as follows:

| | | | | | | | |
|---|---|---|---|---|---|---|---|
| Element ID | Length | BSSID | BSSID Information | Operating Class | Channel Number | PHY Type | Optional Subelements |

As an example, the format of the basic service set identifier information field may be as follows:

| | | | | | | | |
|---|---|---|---|---|---|---|---|
| AP Reachability | Security | Key Scope | Capabilities | Mobility Domain | High Throughput | ... | Reserved |

The basic service set identifier information field may include multiple sub-information fields, and the first identifier bit may be located in a reserved bit of the basic service set identifier information field.

In some embodiments, the first identifier bit indicates, by a first value, that the neighbor AP is a UHR AP, that is, indicates that the neighbor AP supports a UHR function.

The first value may be 1, or may be another value, which is not limited here.

The first identifier bit indicates, by a second value, that the neighbor AP (a neighbor AP of the first AP) is not a UHR AP, that is, indicates that the neighbor AP does not support a UHR function.

The second value may be 0, or may be another value, which is not limited here.

In some embodiments, in a case where the first identifier bit indicates that the neighbor AP is a UHR AP, the first wireless frame further includes at least one of a first information field or a second information field.

The first information field includes a first sub-element identifier bit, and the first sub-element identifier bit indicates, by a third value, that the first information field is a UHR capabilities element field.

The second information field includes a second sub-element identifier bit, and the second sub-element identifier bit indicates, by a fourth value, that the second information field is a UHR operation element field.

For example, applicable optional sub-element IDs in the neighbor report element field are as follows:

| Sub-element ID | Name |
|---|---|
| ... | ... |
| 199 | EHT Capabilities |
| 200 | EHT Operation |
| 201 | Basic Multi-Link |
| 202-220 | Reserved |
| ... | ... |

Based on this, the third value and the fourth value can be any two different sub-element IDs from 202 to 220.

As an example, when the first identifier bit in the first wireless frame indicates that the neighbor AP is a UHR AP, the first wireless frame includes at least one of a UHR capabilities element field or a UHR operation element field.

The UHR capabilities element field includes a first sub-element identifier bit, and the identifier value of the first sub-element identifier bit is a third value, which is used to indicate that the information field in which it is located is a UHR capabilities element field, that is, to indicate that the information field in which it is located is used to indicate UHR capability information.

The UHR operation element field includes a second sub-element identifier bit, and the identifier value of the second sub-element identifier bit is a fourth value, which is used to indicate that the information field in which it is located is a UHR operation element field, that is, to indicate that the information field in which it is located is used to indicate UHR operation information.

As an example, applicable optional sub-element IDs in the neighbor report element field may be as follows:

| sub-element ID | Name |
|---|---|
| ... | ... |
| 199 | EHT Capabilities |
| 200 | EHT Operation |
| 201 | Basic Multi-Link |
| 202 | UHR Capabilities |
| 203 | UHR Operation |
| ... | ... |

At this time, when the first identifier bit indicates that the neighbor AP is a UHR AP, if the first wireless frame includes a UHR capabilities element field, the identifier value of the element identifier field (first sub-element identifier bit) in the UHR capabilities element field may be 202; if the first wireless frame includes a UHR operation element field, the identifier value of the element identifier field (second sub-element identifier bit) in the UHR operation element field may be 203.

Optionally, the first wireless frame includes a neighbor report element field, and when the first identifier bit indicates that the neighbor AP is a UHR AP, the neighbor report element field includes at least one of a first information field or a second information field.

Optionally, when the first identifier bit indicates that the neighbor AP is not a UHR AP, the first wireless frame does not include the first information field and the second information field.

In some embodiments, when the first wireless frame includes the first information field, the first information field includes an element content of a UHR capabilities element field in a second wireless frame sent by the neighbor AP.

That is, when the first wireless frame includes a UHR capabilities element field, the element content of the UHR capabilities element field in the first wireless frame includes the element content of the UHR capabilities element field in the second wireless frame sent by the neighbor AP of the first AP.

When the first wireless frame includes the second information field, the second information field includes an element content of a UHR operation element field in the second wireless frame sent by the neighbor AP.

That is, when the first wireless frame includes a UHR operation element field, the element content of the UHR operation element field in the first wireless frame includes the element content of the UHR operation element field in the second wireless frame sent by the neighbor AP of the first AP.

Optionally, the second wireless frame may be a beacon frame, a probe response frame, an association response frame, or a reassociation response frame.

In some embodiments, when the first identifier bit in the first wireless frame indicates that the neighbor AP is a UHR AP, and the first wireless frame includes the first information field (UHR capabilities element field), the first information field further includes a first sub-information field.

The first sub-information field is used to indicate that the neighbor AP supports data transmission based on a distributed resource unit (dRU).

Optionally, the first sub-information field is specifically used to indicate that the neighbor AP supports data transmission using a dRU and/or a multiple distributed resource unit (M-dRU) with a maximum bandwidth of a first bandwidth.

The first bandwidth may be 80 MHz.

The first sub-information field may indicate, through two information fields, that the neighbor AP supports data transmission using a dRU with a maximum bandwidth of the first bandwidth, and supports data transmission using an M-dRU with a maximum bandwidth of the first bandwidth.

Optionally, formats of the dRU supported by the AP with a maximum bandwidth of the first bandwidth include at least one of:
26-tone-dRU;
52-tone-dRU;
106-tone-dRU;
242-tone-dRU;
484-tone-dRU;

Formats of the M-dRU supported by the AP with a maximum bandwidth of the first bandwidth include at least one of:
26-tone-dRU + 52-tone-dRU;
26-tone-dRU + 106-tone-dRU;
52-tone-dRU + 106-tone-dRU.

In some embodiments, when the first identifier bit in the first wireless frame indicates that the neighbor AP is a UHR AP, and the first wireless frame includes the first information field (UHR capabilities element field), the first information field further includes a second sub-information field.

The second sub-information field is used to indicate whether the neighbor AP supports data transmission using a dRU in a punctured channel.

In some embodiments, when the first identifier bit in the first wireless frame indicates that the neighbor AP is a UHR AP, and the first wireless frame includes the first information field (UHR capabilities element field), the first information field further includes a third sub-information field.

The third sub-information field is used to indicate whether the neighbor AP supports sharing a transmission opportunity (TXOP) with another AP.

Optionally, the third sub-information field may be a UHR TXOP sharing field, used to indicate whether the neighbor AP supports sharing a TXOP with another AP in a UHR scenario.

In some embodiments, when the first identifier bit in the first wireless frame indicates that the neighbor AP is a UHR AP, and the first wireless frame includes the second information field (UHR operation element field), the second information field further includes a fourth sub-information field.

The fourth sub-information field may be a Supported UHR-MCS And NSS Set field.

The fourth sub-information field is used to indicate at least one of:
a maximum number of spatial streams (NSS) supported for transmission by the neighbor AP in different modulation and coding schemes (MCSs); or
a maximum NSS supported for reception by the neighbor AP in different MCSs.

As an example, the fourth sub-information field can be used to indicate the maximum NSS supported for transmission and reception by the neighbor AP under different MCSs (e.g., MCS0-7), for example, the maximum NSS can be 16.

FIG. 3 is a schematic flowchart I of a communication method according to an embodiment of the present disclosure. As shown in FIG. 3, the method is performed by a first AP, and the method includes:
Step S31: determining a first wireless frame, where the first wireless frame includes a first identifier bit, and the first identifier bit is used to indicate whether a neighbor AP is a UHR AP.

In some embodiments, the first AP may be an association response frame, a reassociation response frame, or an authentication frame.

In some embodiments, the first wireless frame includes a neighbor report element field, and the neighbor report element field includes the first identifier bit.

In some embodiments, the first wireless frame includes a neighbor report element field, the neighbor report element field includes a basic service set identifier (BSSID) information field, and the basic service set identifier information field includes the first identifier bit.

The first identifier bit may be at least one reserved bit of the basic service set identifier information field.

As an example, the format of the neighbor report element field may be as follows:

| | | | | | | | |
|---|---|---|---|---|---|---|---|
| Element ID | Length | BSSID | BSSID Information | Operating Class | Channel Number | PHY Type | Optional Subelements |

As an example, the format of the basic service set identifier information (BSSID information) field may be as follows:

| | | | | | | | |
|---|---|---|---|---|---|---|---|
| AP Reachability | Security | Key Scope | Capabilities | Mobility Domain | High Throughput | ... | Reserved |

The basic service set identifier information field may include multiple sub-information fields, and the first identifier bit may be located in a reserved bit of the basic service set identifier information field.

In some embodiments, the first identifier bit indicates, by a first value, that the neighbor AP is a UHR AP, that is, indicates that the neighbor AP supports a UHR function.

The first value may be 1, or may be another value, which is not limited here.

The first identifier bit indicates, by a second value, that the neighbor AP is not a UHR AP, that is, indicates that the neighbor AP does not support a UHR function.

The second value may be 0, or may be another value, which is not limited here.

In some embodiments, in a case where the first identifier bit indicates that the neighbor AP is a UHR AP, the first wireless frame further includes at least one of a first information field or a second information field.

The first information field includes a first sub-element identifier bit, and the first sub-element identifier bit indicates, by a third value, that the first information field is a UHR capabilities element field.

The second information field includes a second sub-element identifier bit, and the second sub-element identifier bit indicates, by a fourth value, that the second information field is a UHR operation element field.

For example, applicable optional sub-element IDs in the neighbor report element field are as follows:

| sub-element ID | Name |
|---|---|
| ... | ... |
| 199 | EHT Capabilities |
| 200 | EHT Operation |
| 201 | Basic Multi-Link |
| 202-220 | Reserved |
| ... | ... |

Based on this, the third value and the fourth value can be any two different sub-element IDs from 202 to 220.

As an example, when the first identifier bit in the first wireless frame indicates that the neighbor AP is a UHR AP, the first wireless frame includes at least one of a UHR capabilities element field or a UHR operation element field.

The UHR capabilities element field includes a first sub-element identifier bit, and the identifier value of the first sub-element identifier bit is a third value, which is used to indicate that the information field in which it is located is a UHR capabilities element field, that is, to indicate that the information field in which it is located is used to indicate UHR capability information.

The UHR operation element field includes a second sub-element identifier bit, and the identifier value of the second sub-element identifier bit is a fourth value, which is used to indicate that the information field in which it is located is a UHR operation element field, that is, to indicate that the information field in which it is located is used to indicate UHR operation information.

As an example, applicable optional sub-element IDs in the neighbor report element field may be as follows:

| sub-element ID | Name |
|---|---|
| ... | ... |
| 199 | EHT Capabilities |
| 200 | EHT Operation |
| 201 | Basic Multi-Link |
| 202 | UHR Capabilities |
| 203 | UHR Operation |
| ... | ... |

At this time, when the first identifier bit indicates that the neighbor AP is a UHR AP, if the first wireless frame includes a UHR capabilities element field, the identifier value of the element identifier field (first sub-element identifier bit) in the UHR capabilities element field may be 202; if the first wireless frame includes a UHR operation element field, the identifier value of the element identifier field (second sub-element identifier bit) in the UHR operation element field may be 203.

Optionally, the first wireless frame includes a neighbor report element field, and when the first identifier bit indicates that the neighbor AP is a UHR AP, the neighbor report element field includes at least one of a first information field or a second information field.

Optionally, when the first identifier bit indicates that the neighbor AP is not a UHR AP, the first wireless frame does not include the first information field and the second information field.

In some embodiments, when the first wireless frame includes the first information field, the first information field includes an element content of a UHR capabilities element field in a second wireless frame sent by the neighbor AP.

That is, when the first wireless frame includes a UHR capabilities element field, the element content of the UHR capabilities element field in the first wireless frame includes the element content of the UHR capabilities element field in the second wireless frame sent by the neighbor AP of the first AP.

When the first wireless frame includes the second information field, the second information field includes an element content of a UHR operation element field in the second wireless frame sent by the neighbor AP.

That is, when the first wireless frame includes a UHR operation element field, the element content of the UHR operation element field in the first wireless frame includes the element content of the UHR operation element field in the second wireless frame sent by the neighbor AP of the first AP.

Optionally, the second wireless frame may be a beacon frame, a probe response frame, an association response frame, or a reassociation response frame.

In some embodiments, when the first identifier bit in the first wireless frame indicates that the neighbor AP is a UHR AP, and the first wireless frame includes the first information field (UHR capabilities element field), the first information field further includes a first sub-information field.

The first sub-information field is used to indicate that the neighbor AP supports data transmission based on a distributed resource unit (dRU).

Optionally, the first sub-information field is specifically used to indicate that the neighbor AP supports data transmission using a dRU and/or a multiple distributed resource unit (M-dRU) with a maximum bandwidth of a first bandwidth.

The first bandwidth may be 80 MHz.

The first sub-information field may indicate, through two information fields, that the neighbor AP supports data transmission using a dRU with a maximum bandwidth of the first bandwidth, and supports data transmission using an M-dRU with a maximum bandwidth of the first bandwidth.

Optionally, formats of the dRU supported by the AP with a maximum bandwidth of the first bandwidth include at least one of:
26-tone-dRU;
52-tone-dRU;
106-tone-dRU;
242-tone-dRU;
484-tone-dRU;

Formats of the M-dRU supported by the AP with a maximum bandwidth of the first bandwidth include at least one of:
26-tone-dRU + 52-tone-dRU;
26-tone-dRU + 106-tone-dRU;
52-tone-dRU + 106-tone-dRU.

In some embodiments, when the first identifier bit in the first wireless frame indicates that the neighbor AP is a UHR AP, and the first wireless frame includes the first information field (UHR capabilities element field), the first information field further includes a second sub-information field.

The second sub-information field is used to indicate whether the neighbor AP supports data transmission using a dRU in a punctured channel.

In some embodiments, when the first identifier bit in the first wireless frame indicates that the neighbor AP is a UHR AP, and the first wireless frame includes the first information field (UHR capabilities element field), the first information field further includes a third sub-information field.

The third sub-information field is used to indicate whether the neighbor AP supports sharing a transmission opportunity (TXOP) with another AP.

Optionally, the third sub-information field may be a UHR TXOP sharing field, used to indicate whether the neighbor AP supports sharing a TXOP with another AP in a UHR scenario.

In some embodiments, when the first identifier bit in the first wireless frame indicates that the neighbor AP is a UHR AP, and the first wireless frame includes the second information field (UHR operation element field), the second information field further includes a fourth sub-information field.

The fourth sub-information field may be a Supported UHR-MCS And NSS Set field.

The fourth sub-information field is used to indicate at least one of:
a maximum number of spatial streams (NSS) supported for transmission by the neighbor AP in different modulation and coding schemes (MCSs); or
a maximum NSS supported for reception by the neighbor AP in different MCSs.

As an example, the fourth sub-information field can be used to indicate the maximum NSS supported for transmission and reception by the neighbor AP under different MCSs (e.g., MCS0-7), for example, the maximum NSS can be 16.

Step S32: sending the first wireless frame.

In some embodiments, after determining the first wireless frame, the first AP may send the first wireless frame to at least one STA.

Optionally, the first AP may send the first wireless frame to at least one STA by broadcasting.

The communication method involved in the embodiments of the present disclosure may include at least one of the foregoing steps and embodiments. For example, any one of steps S31 to S32 may be implemented as an independent embodiment, and step S31 or step S32 may be implemented as an independent embodiment, but is not limited thereto.

FIG. 4 is a schematic flowchart II of a communication method according to an embodiment of the present disclosure. As shown in FIG. 4, the method is performed by a STA, and the method includes:
Step S41: receiving a first wireless frame sent by a first AP, where the first wireless frame includes a first identifier bit, and the first identifier bit is used to indicate whether a neighbor AP is a UHR AP.

In some embodiments, the specific description of the first wireless frame can refer to the description of the first wireless frame in FIG. 2 and/or FIG. 3, which will not be repeated here.

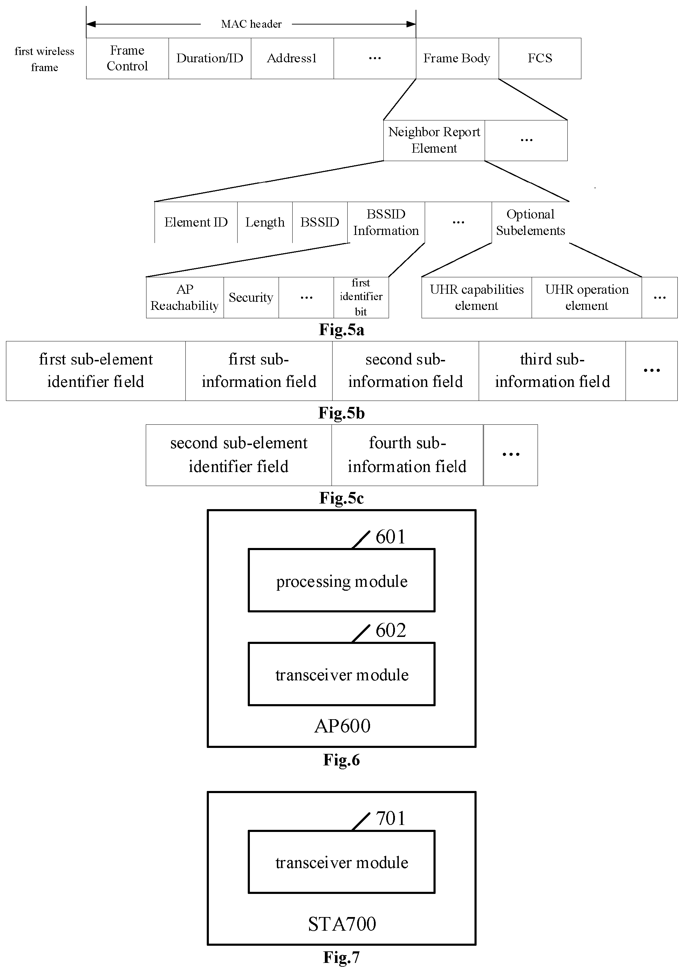

As an example, the frame format of the first wireless frame in FIG. 2 to FIG. 4 is described below with reference to FIG. 5a to FIG. 5c.

The frame format of the first wireless frame may be the frame format of a management frame as shown in FIG. 5a. The first wireless frame includes a neighbor report element in a frame body. The neighbor report element field includes multiple information fields, including a basic service set identifier information field. The basic service set identifier information field includes multiple information fields, including a first identifier bit.

When the identifier value of the first identifier bit is a first value, it is used to indicate that the neighbor AP of the first AP is a UHR AP; when the identifier value of the first identifier bit is a second value, it is used to indicate that the neighbor AP of the first AP is not a UHR AP.

When the identifier value of the first identifier bit is the first value, an optional subelements field of the neighbor report element field includes a UHR capabilities element field and a UHR operation element field.

The UHR capabilities element field includes multiple sub-information fields. The format of the UHR capabilities element field can be as shown in FIG. 5b. The UHR capabilities element field includes a first sub-element identifier bit. The first sub-element identifier bit indicates, by a third value, that the information field in which it is located is a UHR capabilities element field. The UHR capabilities element field also includes a first sub-information field, a second sub-information field, a third sub-information field, and other information fields used to indicate the element content of the UHR capabilities element field in the second wireless frame sent by the neighbor AP.

The first sub-information field is used to indicate that the neighbor AP supports data transmission using a dRU and/or M-dRU with a maximum bandwidth of 80 MHz. The second sub-information field is used to indicate whether the neighbor AP supports data transmission using a dRU in a punctured channel. The third sub-information field is used to indicate whether the neighbor AP supports sharing a transmission opportunity (TXOP) with another AP.

The UHR operation element field includes multiple sub-information fields. The format of the UHR operation element field can be as shown in FIG. 5c. The UHR operation element field includes a second sub-element identifier bit. The second sub-element identifier bit indicates, by a fourth value, that the information field in which it is located is a UHR operation element field. The UHR operation element field also includes a fourth sub-information field and other information fields used to indicate the element content of the UHR operation element field in the second wireless frame sent by the neighbor AP.

The fourth sub-information field is used to indicate the maximum number of spatial streams (NSS) supported for transmission and/or reception by the neighbor AP under different MCSs.

FIG. 6 is a schematic structural diagram of an AP according to an embodiment of the present disclosure. As shown in FIG. 6, an AP 600 may include: a processing module 601 and a transceiver module 602.

In some embodiments, the processing module 601 is configured to determine a first wireless frame, where the first wireless frame includes a first identifier bit, and the first identifier bit is used to indicate whether a neighbor AP is an ultra high reliability (UHR) AP;

the transceiver module 602 is configured to send the first wireless frame.

Optionally, the transceiver module 602 is configured to perform at least one of the transceiving steps performed by the first AP in any of the above methods (e.g., step S21, step S32, but not limited thereto), which will not be repeated here.

Optionally, the processing module 601 is configured to perform at least one of the processing steps performed by the first AP in any of the above methods (e.g., step S31, but not limited thereto), which will not be repeated here.

FIG. 7 is a schematic structural diagram of a STA according to an embodiment of the present disclosure. As shown in FIG. 7, a STA 700 may include: a transceiver module 701.

In some embodiments, the transceiver module 701 is configured to receive a first wireless frame sent by a first AP, where the first wireless frame includes a first identifier bit, and the first identifier bit is used to indicate whether a neighbor AP is a UHR AP.

Optionally, the transceiver module 701 is configured to perform at least one of the transceiving steps performed by the STA in any of the above methods (e.g., step S41, but not limited thereto), which will not be repeated here.

It should be understood that the division of the above units or modules is only a logical function division, and they may be fully or partially integrated into one physical entity in actual implementation, or may be physically separated. In addition, the units or modules may be implemented in a form of a processor calling software: for example, including a processor, the processor is connected to a memory, the memory stores instructions, and the processor calls the instructions stored in the memory to implement any of the above methods or implement the functions of the above units or modules, where the processor is, for example, a general-purpose processor, such as a central processing unit (CPU) or a microprocessor, and the memory is a memory inside or outside the device. Alternatively, the units or modules in the device may be implemented in a form of a hardware circuit, and the functions of some or all of the units or modules may be realized by designing the hardware circuit. The above hardware circuit can be understood as one or more processors; for example, in one implementation, the above hardware circuit is an application-specific integrated circuit (ASIC), and the functions of some or all of the above units or modules are realized by designing the logical relationship of components in the circuit; for another example, in another implementation, the above hardware circuit can be implemented by a programmable logic device (PLD), taking a Field Programmable Gate Array (FPGA) as an example, which can include a large number of logic gate circuits, and the connection relationship between the logic gate circuits is configured by a configuration file, so as to realize the functions of some or all of the above units or modules. All the units or modules of the above device may be implemented entirely by a processor calling software, or entirely by a hardware circuit, or partially by a processor calling software and partially by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which can be understood as a microprocessor), or a digital signal processor (DSP); in another implementation, the processor may realize a certain function through the logical relationship of a hardware circuit. The logical relationship of the above hardware circuit is fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration document to configure the hardware circuit can be understood as the process in which the processor loads instructions to implement the functions of some or all of the above units or modules. In addition, it may also be a hardware circuit designed for artificial intelligence, which can be understood as an ASIC, such as a Neural Network Processing Unit (NPU), a Tensor Processing Unit (TPU), a Deep learning Processing Unit (DPU), etc.

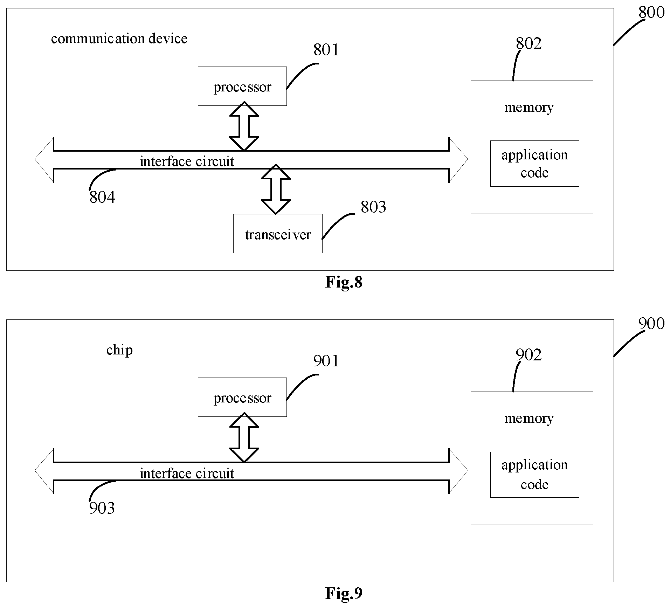

FIG. 8 is a schematic structural diagram of a communication device according to an embodiment of the present disclosure. The communication device 800 may be an AP or a STA, or may be a chip, a chip system, or a processor that supports the AP or the STA to implement any of the above methods. The communication device can be used to implement the methods described in the above method embodiments, and details can be referred to the description in the above method embodiments.

As shown in FIG. 8, the communication device 800 includes one or more processors 801. The processor 801 may be a general-purpose processor or a special-purpose processor, for example, may be a baseband processor or a central processing unit. The baseband processor can be used to process communication protocols and communication data, and the central processing unit can be used to control a communication device (e.g., a base station, a baseband chip, a terminal device, a terminal device chip, a DU or a CU, etc.), execute a program, and process data of the program. The communication device 800 is configured to perform any of the above methods.

In some embodiments, the communication device 800 further includes one or more memories 802 for storing instructions. Optionally, all or part of the memory 802 may also be located outside the communication device 800.

In some embodiments, the communication device 800 further includes one or more transceivers 803. When the communication device 800 includes one or more transceivers 803, the transceiver 803 performs at least one of the communication steps such as sending and/or receiving in the above methods (e.g., step S21, step S32, step S41, but not limited thereto), and the processor 801 performs at least one of the other steps (e.g., step S31, but not limited thereto).

In some embodiments, a transceiver may include a receiver and/or a transmitter, and the receiver and the transmitter may be separate or integrated together. Optionally, terms such as transceiver, transceiver unit, transceiver machine, transceiver circuit can be interchanged, terms such as transmitter, transmitting unit, transmitter machine, transmitter circuit can be interchanged, and terms such as receiver, receiving unit, receiver machine, receiver circuit can be interchanged.

In some embodiments, the communication device 800 may include one or more interface circuits 804. Optionally, the interface circuit 804 is connected to the memory 802, and the interface circuit 804 can be used to receive signals from the memory 802 or other devices, and can be used to send signals to the memory 802 or other devices. For example, the interface circuit 804 can read the instructions stored in the memory 802 and send the instructions to the processor 801.

The communication device 800 described in the above embodiments may be an AP or a STA, but the scope of the communication device 800 described in the present disclosure is not limited thereto, and the structure of the communication device 800 may not be limited by FIG. 7. The communication device may be an independent device or a part of a larger device. For example, the above communication device may be: (1) an independent integrated circuit IC, or a chip, or a chip system or subsystem; (2) a set of one or more ICs, optionally, the above set of ICs may also include a storage component for storing data and programs; (3) an ASIC, such as a modem (Modem); (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others, etc.

FIG. 9 is a schematic structural diagram of a chip 900 according to an embodiment of the present disclosure. The chip 900 includes one or more processors 901, and the chip 900 is configured to perform any of the above methods.

In some embodiments, the chip 900 further includes one or more interface circuits 903. Optionally, the interface circuit 903 is connected to a memory 902, and the interface circuit 903 can be used to receive signals from the memory 902 or other devices, and can be used to send signals to the memory 902 or other devices. For example, the interface circuit 903 can read instructions stored in the memory 902 and send the instructions to the processor 901.

In some embodiments, the interface circuit 903 performs at least one of the communication steps such as sending and/or receiving in the above methods (e.g., step S21, step S32, step S41, but not limited thereto), and the processor 901 performs at least one of the other steps (e.g., step S31, but not limited thereto).

In some embodiments, terms such as interface circuit, interface, transceiver pin, transceiver can be interchanged.

In some embodiments, the chip 900 further includes one or more memories 902 for storing instructions. Optionally, all or part of the memory 902 may be located outside the chip 900.

The present disclosure also proposes a storage medium, where the storage medium stores instructions, and when the instructions are executed on the communication device 800, the communication device 800 is caused to perform any of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure also proposes a program product, where when the program product is executed by the communication device 800, the communication device 800 is caused to perform any of the above methods. Optionally, the program product is a computer program product.

The present disclosure also proposes a computer program, where when the computer program is run on a computer, the computer is caused to perform any of the above methods. The above description is only a preferred embodiment of the present disclosure and an illustration of the technical principles used. Those skilled in the art should understand that the scope of disclosure involved in the present disclosure is not limited to the technical solutions formed by the specific combination of the above technical features, but should also cover other technical solutions formed by any combination of the above technical features or their equivalent features without departing from the above disclosed concept. For example, a technical solution formed by replacing the above features with technical features having similar functions disclosed in the present disclosure (but not limited to) is an example.

## Claims

1. A communication method, comprising:
determining, by a first access point (AP), a first wireless frame, wherein the first wireless frame comprises a first identifier bit, and the first identifier bit is used to indicate whether a neighbor AP is an ultra high reliability (UHR) AP; and
sending, by the first AP, the first wireless frame.

2. The method according to claim 1, wherein the first wireless frame comprises a neighbor report element field, the neighbor report element field comprises a basic service set identifier information field, and the basic service set identifier information field comprises the first identifier bit.

3. The method according to claim 1, wherein the first identifier bit indicates, by a first value, that the neighbor AP is the UHR AP, and the first identifier bit indicates, by a second value, that the neighbor AP is not the UHR AP.

4. The method according to claim 1 or 3, wherein in a case where the first identifier bit indicates that the neighbor AP is the UHR AP, the first wireless frame comprises a neighbor report element field, and the neighbor report element field comprises at least one of a first information field or a second information field;
wherein the first information field comprises a first sub-element identifier bit, and the first sub-element identifier bit indicates, by a third value, that the first information field is a UHR capabilities element field; and
the second information field comprises a second sub-element identifier bit, and the second sub-element identifier bit indicates, by a fourth value, that the second information field is a UHR operation element field.

5. The method according to claim 4, wherein an element content of the first information field comprises an element content of a UHR capabilities element field in a second wireless frame sent by the neighbor AP, and an element content of the second information field comprises an element content of a UHR operation element field in the second wireless frame.

6. The method according to claim 4, wherein the first information field comprises at least one of:
a first sub-information field, wherein the first sub-information field is used to indicate that the neighbor AP supports a data transmission using a distributed resource unit (dRU) and/or a multiple distributed resource unit (M-dRU) with a maximum bandwidth of 80 MHz;
a second sub-information field, wherein the second sub-information field is used to indicate whether the neighbor AP supports a data transmission using a dRU in a punctured channel; or
a third sub-information field, wherein the third sub-information field is used to indicate whether the neighbor AP supports sharing a transmission opportunity (TXOP) with another AP.

7. The method according to claim 4, wherein the second information field comprises a fourth sub-information field, and the fourth sub-information field is used to indicate at least one of:
a maximum number of spatial streams (NSS) supported for transmission by the neighbor AP in different modulation and coding schemes (MCSs); or
a maximum NSS supported for reception by the neighbor AP in different MCSs.

8. A communication method, comprising:
receiving, by a station (STA), a first wireless frame sent by a first access point (AP), wherein the first wireless frame comprises a first identifier bit, and the first identifier bit is used to indicate whether a neighbor AP is an ultra high reliability (UHR) AP.

9. The method according to claim 8, wherein the first wireless frame comprises a neighbor report element field, the neighbor report element field comprises a basic service set identifier information field, and the basic service set identifier information field comprises the first identifier bit.

10. The method according to claim 8, wherein the first identifier bit indicates, by a first value, that the neighbor AP is the UHR AP, and the first identifier bit indicates, by a second value, that the neighbor AP is not the UHR AP.

11. The method according to claim 8 or 10, wherein in a case where the first identifier bit indicates that the neighbor AP is the UHR AP, the first wireless frame comprises a neighbor report element field, and the neighbor report element field comprises at least one of a first information field or a second information field;
wherein the first information field comprises a first sub-element identifier bit, and the first sub-element identifier bit indicates, by a third value, that the first information field is a UHR capabilities element field; and
the second information field comprises a second sub-element identifier bit, and the second sub-element identifier bit indicates, by a fourth value, that the second information field is a UHR operation element field.

12. The method according to claim 11, wherein an element content of the first information field comprises an element content of a UHR capabilities element field in a second wireless frame sent by the neighbor AP, and an element content of the second information field comprises an element content of a UHR operation element field in the second wireless frame.

13. The method according to claim 11, wherein the first information field comprises at least one of:
a first sub-information field, wherein the first sub-information field is used to indicate that the neighbor AP supports a data transmission using a distributed resource unit (dRU) and/or a multiple distributed resource unit (M-dRU) with a maximum bandwidth of 80 MHz;
a second sub-information field, wherein the second sub-information field is used to indicate whether the neighbor AP supports a data transmission using a dRU in a punctured channel; or
a third sub-information field, wherein the third sub-information field is used to indicate whether the neighbor AP supports sharing a transmission opportunity (TXOP) with another AP.

14. The method according to claim 11, wherein the second information field comprises a fourth sub-information field, and the fourth sub-information field is used to indicate at least one of:
a maximum number of spatial streams (NSS) supported for transmission by the neighbor AP in different modulation and coding schemes (MCSs); or
a maximum NSS supported for reception by the neighbor AP in different MCSs.

15. An access point (AP), comprising:
a processing module configured to determine a first wireless frame, wherein the first wireless frame comprises a first identifier bit, and the first identifier bit is used to indicate whether a neighbor AP is an ultra high reliability (UHR) AP, and
a transceiver module configured to send the first wireless frame.

16. A station (STA), comprising:
a transceiver module configured to receive a first wireless frame sent by a first access point (AP), wherein the first wireless frame comprises a first identifier bit, and the first identifier bit is used to indicate whether a neighbor AP is an ultra high reliability (UHR) AP.

17. An access point (AP), comprising one or more processors;
wherein the AP is configured to perform the communication method according to any one of claims 1 to 7.

18. A station (STA), comprising one or more processors;
wherein the STA is configured to perform the communication method according to any one of claims 8 to 14.

19. A storage medium having stored therein instructions that, when executed by a communication device, cause the communication device to perform the communication method according to any one of claims 1 to 7 or any one of claims 8 to 14.
